# EUROPEAN PATENT APPLICATION

(11) **EP 1 371 994 A2**
(43) Date of publication of application: **17.12.2003**
(21) Application number: 03013120.5
(22) Date of filing: 11.06.2003
(51) Int. Cl.: G01R 1/073

(54) **Apparatus to measure and control large-size plane elements**

(30) Priority: 12.06.2002 IT UD20020132
(71) Applicant: Baccini, Gisulfo, I-31030 Mignagola di Carbonera (TV) (IT)
(72) Inventor: Baccini, Gisulfo, I-31030 Mignagola di Carbonera (TV) (IT)
(74) Representative: Petraz, Gilberto Luigi

(57) **Abstract**

Apparatus to measure and control large-size plane elements (20), comprising a fixed base (11) having a horizontal supporting plane (17) on which the plane elements (20) are able to be arranged and horizontal guides (21, 22) arranged parallel to a first horizontal axis (X), a supporting structure (30) able to slide on the horizontal guides (21, 22), a slider (50) able to slide on the supporting structure (30) along a second horizontal axis (Y) perpendicular to the first horizontal axis (X), and a measurement and control unit (60) mounted on the slider (50) in order to slide in the two orthogonal directions (X-Y) with respect to the horizontal supporting plane (17). The horizontal guides comprise at least a first pair of bars (21) arranged on one side of the horizontal supporting plane (17), parallel to the first axis (X) and at a determinate distance (d) from each other, so as to define a first horizontal compartment inside which a guide element (37) of the supporting structure (30) is arranged.

## Description

### FIELD OF THE INVENTION

The present invention concerns an apparatus to measure and control large-size plane elements, even more than one square meter, such as electronic circuits, screens for televisions or suchlike. The apparatus is applied particularly in the production of flat screens made with liquid crystal devices by means of Thin Film Transistor (TFT) technology, Plasma Display Panel (PDP) technology or similar technologies. The apparatus comprises a fixed base, advantageously made of granite, on which a bridge, also with a granite structure, is slidably mounted along a first axis (X); on said bridge a slider is slidably mounted along a second axis (Y), perpendicular to the first axis (X); on said slider a high precision measurement and control unit is mounted, provided with a laser ray lector and a digital video camera, in order to verify matrixes having a high resolution, in the range of more than 1,500 pixels per square millimeter.

### BACKGROUND OF THE INVENTION

It is known that apparatuses to measure and control large-size plane electronic products, such as for example the flat screens of televisions made with TFT or PDP technology, comprise a horizontal supporting surface and must be provided with a slider which can move with extreme precision along two axes (X-Y) horizontal and orthogonal to each other, in order to detect, by means of a suitable detection unit mounted on the slider, possible errors or anomalies in the high resolution matrixes, in the range of a line or column every 25 µ, which matrixes are proper to the aforesaid flat screens.

It is also known that such flat screens have lateral sizes of more than one meter, so that said slider must necessarily maintain very precise directions of advance with respect to the two horizontal axes (X-Y), in order to detect a possible error of parallelism between the different lines and columns of the screen to be controlled.

Known apparatuses have both the base and also the movable bridge, on which the slider is slidably mounted, consisting of metal structures, made by means of a plurality of metal elements welded together. This makes said structures not very stable and subject to deformations and stretching due mainly to differences in temperature so that, in fact, with the state of the art it is very problematic and chancy to obtain very precise movements of the slider and the measurement and control unit associated therewith. Consequently, the measurements and controls of the products are imprecise and not very reliable, with the risk that in a quality control defective products are accepted or good products are erroneously rejected.

Applicant has devised and embodied the apparatus according to the present invention to overcome these shortcomings and to obtain other advantages.

### SUMMARY OF THE INVENTION

The apparatus to measure and control large-size plane elements according to the present invention is set forth and characterized in the main claim, while the dependent claims describe other innovative characteristics of the present invention.

A purpose of the present invention is to achieve an apparatus to measure and control large-size plane elements, even more than one square meter, such as electric circuits or flat screens for televisions or suchlike, which allows to make measurements and controls with great precision and reliability on workings with tolerances in the range of some microns and on distances of even more than some meters, so as to reduce to a minimum the error rate in the verifications made.

In accordance with this purpose, an apparatus according to the invention comprises a fixed base having a horizontal supporting plane, on which the plane elements to be measured or controlled are able to be arranged, and first guides arranged parallel to a first horizontal axis (X). The apparatus also comprises first supporting means, able to slide on said first guides, and second supporting means able to slide on said first supporting means along a second horizontal axis (Y), perpendicular to said first horizontal axis (X). A measurement and control unit is mounted on said second supporting means so as to be able to slide in the two orthogonal directions (X-Y) with respect to said horizontal supporting plane.

The first guides advantageously comprise at least a first pair of bars arranged on one side of said horizontal supporting plane, parallel to said first axis (X) and at a determinate distance (d) from each other, so as thus to define a first horizontal compartment inside which guide means for said first supporting means are arranged.

Said guide means advantageously consist of first motor means for said first supporting means.

Each guide bar comprises a horizontal surface on which said first supporting means are supported at one end by means of first pneumostatic means, and a vertical surface arranged in said first horizontal compartment. Moreover, second pneumostatic means are able to keep said guide means equidistant from the two vertical surfaces of said guide bars, so as thus to define a precise point of reference along the second axis (Y).

Said first guides also comprise a second pair of bars arranged on the opposite side of said horizontal supporting plane, parallel to said first axis (X) and at a determinate distance (d) from each other, so as thus to define a second horizontal compartment inside which second motor means for said first supporting means are arranged. The second motor means, unlike the first motor means, are housed with ample play inside the second horizontal compartment.

The first supporting means, which advantageously comprise a granite structure, are therefore guided laterally only along one edge of the supporting plane and can expand freely towards the opposite edge.

Moreover, the first motor means are connected by means of a pin to the corresponding end of said structure, so that the latter can freely oscillate with respect to said pin, without the pneumostatic pads jamming against the corresponding vertical surfaces.

### BRIEF DESCRIPTION OF THE DRAWINGS

These and other characteristics of the present invention will become apparent from the following description of a preferential form of embodiment, given as a non-restrictive example, with reference to the attached drawings wherein:
- fig. 1 is a plane view of an apparatus to measure and control large-size plane elements according to the present invention;
- fig. 2 is a front view of the fixed base of the apparatus in fig. 1;
- fig. 3 is an enlarged front view of a detail of the apparatus in fig. 1;
- fig. 4 is an enlarged detail of the plane view in fig. 1;
- fig. 5 is an enlarged detail of fig. 3;
- fig. 6 is a section along the line from VI to VI in fig. 3, on an enlarged scale.

### DETAILED DESCRIPTION OF A PREFERENTIAL EMBODIMENT

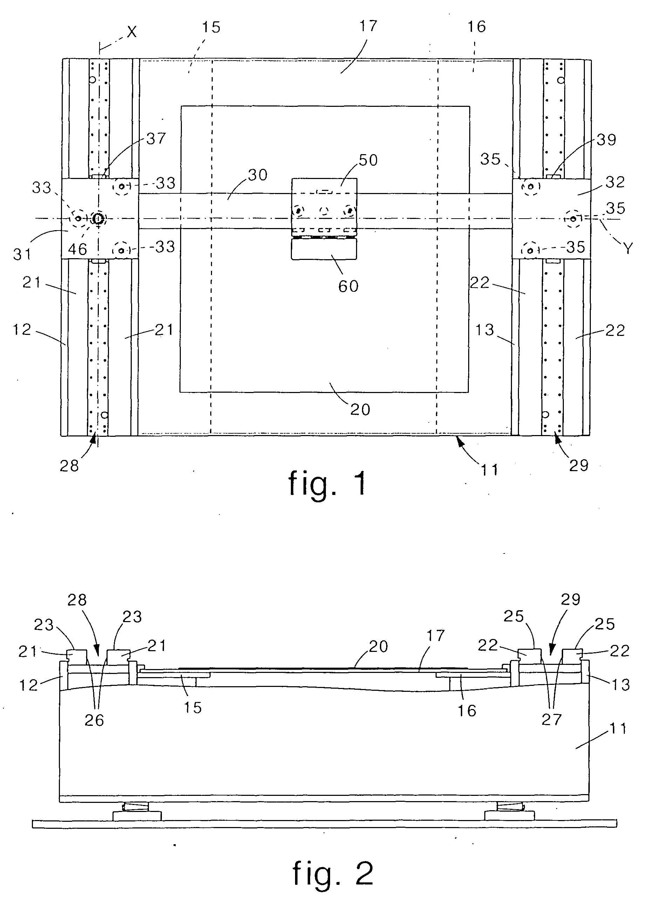

With reference to figs. 1 and 2, an apparatus 10 to measure and control large-size plane elements according to the present invention comprises a fixed base 11 having a length of about 2.5 m, a width of about 3 m and a height of about 1 m. The fixed base 11 is made with a plurality of granite plates, for example black African granite, some arranged horizontally and others vertically and attached together by means of adhesives or mechanical attachment elements of a known type, so as to form a box-like structure, solid and practically undeformable, for example as described in the patent application for an industrial invention UD2002A000131, which the present Applicant filed on 11 June 2002.

To be more exact, the fixed base 11 comprises two vertical uprights 12 and 13, on which are mounted two horizontal brackets 15 and 16, which support a horizontal supporting plane 17, for example made of glass, on which any plane element 20 to be measured and controlled is able to be rested.

The fixed base 11 also comprises two horizontal bars, or graduated rods, 21 arranged on one side of the supporting plane 17 and parallel to a first horizontal axis X, and two horizontal bars, or graduated rods, 22 arranged on the opposite side of the supporting plane 17 and also parallel to the axis X. The bars 21 and 22 are also made of granite.

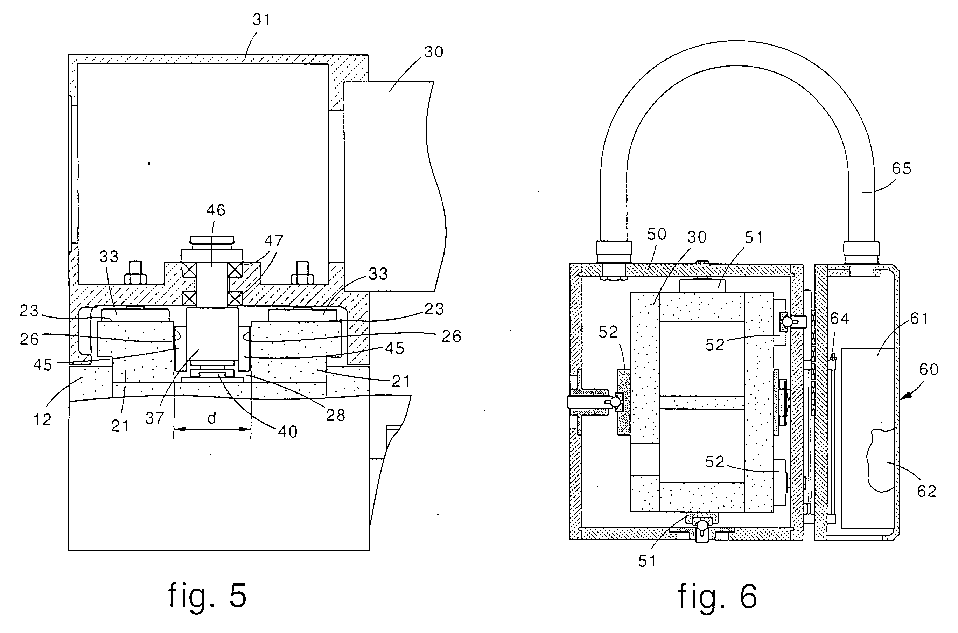

The bars 21 and 22 are shaped so as to have respectively horizontal upper surfaces 23 and 25 and inner vertical surfaces 26 and 27, which define two horizontal compartments 28 and 29 parallel to each other. The distance "d" (fig. 5) between the vertical surfaces 26, 27 of each compartment 28 and 29 is constant and equal to about 125 mm.

A bridge structure 30 (figs. 1, 2 and 3), substantially horizontal and also made of granite, is able to slide parallel to a second axis Y, perpendicular to the axis X, on the horizontal guides of the fixed base 11, defined by the bars 21 and 22.

The bridge structure 30 has two metal ends 31 and 32 provided with pneumostatic pads 33 and 35, of a known type, able to create an air cushion between the ends 31 and 32 and the upper surfaces 23 and 25 of the bars 21 and 22.

In the compartments 28 and 29 are arranged two linear electric motors 37, respectively 39, of a known type, for example of the type described in the patent applications for an industrial invention UD2001A000208 and UD2001A000209 filed by the present Applicant on 14 December 2001. To be more exact, the motors 37 and 39 are mounted on the lower part of the ends 31, respectively 32, of the bridge structure 30 and are able to cooperate with fixed elements 40, respectively 41, attached to the fixed base 11.

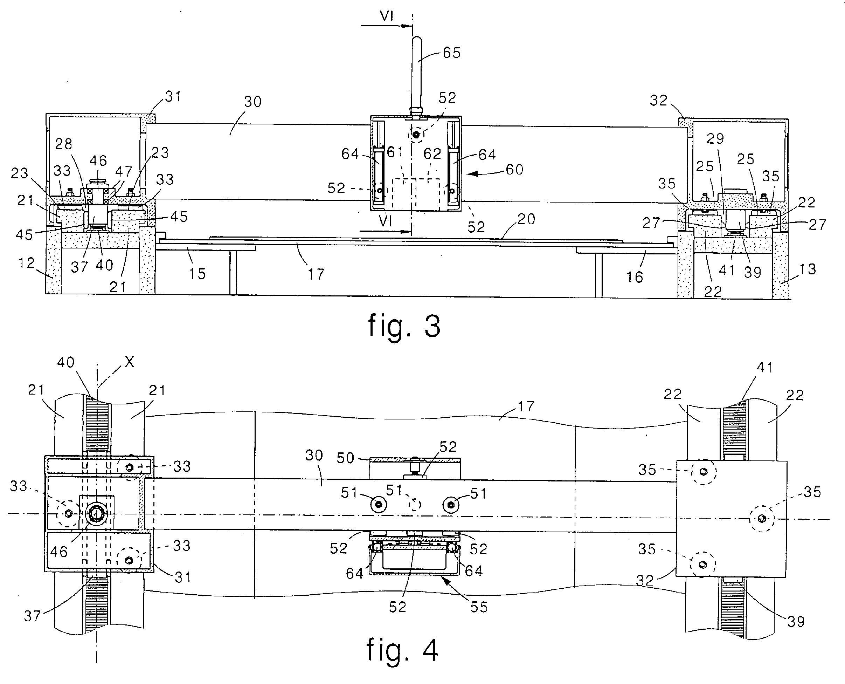

According to a characteristic of the present invention, only one of the two ends of the bridge structure 30, in this case the end 31, is provided with pneumostatic pads 45 (figs. 3 and 5) which keep the motor 37 perfectly guided in the corresponding compartment 28 and equidistant from the two vertical surfaces 26. The motor 37 therefore functions as a guide means for the bridge structure 30 with respect to the bars 21.

The motor 39, on the contrary, is housed with ample play in the corresponding compartment 29 (fig. 3).

In this way every possible heat dilation of the bridge structure 30, which is some meters long, does not have a negative effect on the coupling of the end 32 and the corresponding bars 22, so that its ability to slide along the axis X is always guaranteed.

Moreover, according to another characteristic of the present invention, while the motor 39 is attached in removable manner to the corresponding end 32, the motor 37 is mounted on the end 31 by means of a vertical pin 46 and two bearings 47. In this way the bridge structure 30 is free to oscillate by some degrees with respect to the pin 46, without the motor 39, arranged at the opposite end, being damaged.

The alignment of the two linear electric motors 37 and 39 and the maintenance of the parallelism of the bridge structure 30 with respect to the axis Y are electronically guaranteed by the control of the motors 37 and 39, which occurs in a known manner by means of the electric signals generated by linear position transducers, also of a known type, arranged in the compartments 28 and 29 and not shown in the drawings.

On the bridge structure 30 (figs. 1, 4 and 6) a slider 50 is mounted, able to slide along the axis Y, supported vertically by a first group of pneumostatic pads 51 and guided vertically by a second group of pneumostatic pads 52, also of a known type.

The groups of pads 51 and 52 are such as to guarantee a perfect balancing of the opposing forces, vertical and horizontal, and a consequent optimum sliding of the slider 50 with respect to the bridge structure 30.

A measurement and control unit 60 of a known type is mounted on the slider 50, and using for example a laser ray lector 61 and one or more digital video cameras 62.

The displacement of the slider 50 and of the associated measurement and control unit 60 along the axis Y is obtained by means of a linear motor, also of a known type and not shown in the drawings.

Linear actuators 64 are mounted on the slider 50 to command the vertical displacement of the measurement and control unit 60, in order to bring it closer to, or distance it from, the supporting plane 17.

A flexible pipe 65 connects the measurement and control unit 60 to the slider 50.

It is clear that modifications and additions of parts may be made to the apparatus 10 as described heretofore, without departing from the field and scope of the present invention.

It is also clear that, although the present invention has been described with reference to a specific example, a person of skill in the art shall certainly be able to achieve many other equivalent forms of apparatuses to measure and control large-size plane elements, all of which shall come within the field and scope of the present invention.

## Claims

1. Apparatus to measure and control large-size plane elements (20), comprising a fixed base (11) having a horizontal supporting plane (17), on which said large-size plane elements (20) are able to be arranged, and first guides (21, 22) arranged parallel to a first horizontal axis (X), first supporting means (30) able to slide on said first guides (21, 22), second supporting means (50) able to slide on said first supporting means (30) along a second horizontal axis (Y) perpendicular to said first horizontal axis (X), and a measurement and control unit (60) mounted on said second supporting means (50) in order to slide in the two orthogonal directions (X-Y) with respect to said horizontal supporting plane (17), **characterized in that** said first guides comprise at least a first pair of guide bars (21) arranged on one side of said horizontal supporting plane (17) and parallel to said first axis (X) and at a determinate distance (d) from each other, so as to define a first horizontal compartment (28) inside which guide means (37) for said first supporting means (30) are arranged.

2. Apparatus as in claim 1, **characterized in that** said guide means consist of first motor means (37) to move said first supporting means (30) along said first axis (X).

3. Apparatus as in claim 1 or 2, **characterized in that** said guide bars (21) each comprise a horizontal surface (23), on which said first supporting means (30) are supported by first pneumostatic means (33), and a vertical surface (26) arranged in said horizontal compartment (28), and **in that** second pneumostatic means (45) are able to keep said guide means (37) equidistant from the two vertical surfaces (26) of said guide bars (21) and thus define a reference position along said first axis (X) of said first supporting means (30).

4. Apparatus as in any claim hereinbefore, **characterized in that** said first guides also comprise a second pair of guide bars (22) arranged on the opposite side of said horizontal supporting plane (17) and parallel to said first axis (X) and at a determinate distance (d) from each other, so as to define a second horizontal compartment (29) inside which second motor means (39) for said first supporting means (30) are arranged.

5. Apparatus as in claim 4, **characterized in that** said second motor means (39) are housed with ample play in said second horizontal compartment (29).

6. Apparatus as in claim 4 or 5, **characterized in that** said first supporting means comprise a substantially horizontal structure (30), at the ends (31, 32) of which are mounted said first motor means (37) and respectively said second motor means (39).

7. Apparatus as in claim 6, **characterized in that** said first motor means (37) are connected to a first end (31) of said structure (30) by means of a vertical pin (46), so that said structure (30) is free to oscillate with respect to said vertical pin (46).

8. Apparatus as in claim 7, **characterized in that** between said vertical pin (46) and said structure (30) at least a bearing (47) is arranged.

9. Apparatus as in claim 6, **characterized in that** said second supporting means comprise a slider (50) slidably mounted on said structure (30) and supported vertically by a first group of pneumostatic pads (51) and guided vertically by a second group of pneumostatic pads (52).

10. Apparatus as in claim 9, **characterized in that** said groups of pads (51, 52) are able to guarantee a perfect balancing of the opposing forces, vertical and horizontal, and a consequent optimum sliding of said slider (50) with respect to said structure (30).
